(19) Europäisches Patentamt
European Patent Office
Office européen des brevets

(11) **EP 1 839 727 A1**

(12) **EUROPÄISCHE PATENTANMELDUNG**

(43) Veröffentlichungstag:
**03.10.2007 Patentblatt 2007/40**

(51) Int Cl.:
***B01D 53/14*** *(2006.01)*

(21) Anmeldenummer: **07004613.1**

(22) Anmeldetag: **06.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **28.03.2006 DE 102006014302**

(71) Anmelder: **Linde Aktiengesellschaft**
**65189 Wiesbaden (DE)**

(72) Erfinder:
• **Prüssner, Ulrich**
  **81547 München (DE)**
• **Weiss, Horst**
  **81375 München (DE)**

(74) Vertreter: **Zahn, Christoph et al**
**Linde AG**
**Patente und Marken**
**Dr.-Carl-von-Linde-Strasse 6-14**
**82049 Pullach (DE)**

(54) **Verfahren und Vorrichtung zur Regenerierung des beladenen Waschmittels in einer physikalischen Gaswäsche**

(57)     Die Erfindung betrifft ein Verfahren zur Regenerierung des beladenen Waschmittels (6,7) aus einer physikalischen Gaswäsche (T1), in welcher aus einem zu reinigenden Gasgemisch (1) wenigstens in einem ersten von zumindest zwei aufeinander folgenden Waschschritten eine oder mehrere Gaskomponenten weitgehend selektiv entfernt werden, sowie eine Vorrichtung zur Durchführung des Verfahrens. Das aus dem ersten Waschschritt abgezogene beladene Waschmittel (7) wird unabhängig von der übrigen Menge des beladenen Waschmittels (6) einem Regenerierschritt (T2a) zur Abtrennung der im ersten Waschschritt selektiv aus dem Rohgas entfernten Gaskomponenten (11) unterzogen.

Figur 2

**Beschreibung**

Die Erfindung betrifft ein Verfahren zur Regenerierung des beladenen Waschmittels aus einer physikalischen Gaswäsche, in welcher aus einem zu reinigenden Gasgemisch (Rohgas) wenigstens in einem ersten von zumindest zwei aufeinander folgenden Waschschritten eine oder mehrere Gaskomponenten weitgehend selektiv entfernt werden, sowie eine Vorrichtung zur Durchführung des Verfahrens.

Physikalische Gaswäschen nutzen die Eigenschaft von Flüssigkeiten aus, gasförmige Stoffe zu absorbieren und in Lösung zu halten, ohne die Gase dabei chemisch zu binden. Wie gut ein Gas von einer Flüssigkeit absorbiert wird, wird durch den Löslichkeitskoeffizienten ausgedrückt: je besser sich das Gas in der Flüssigkeit löst, desto größer ist sein Löslichkeitskoeffizient. Der Löslichkeitskoeffizient ist temperaturabhängig und steigt i.Allg. mit fallender Temperatur an.

Soll aus einem Gasgemisch eine Gaskomponente i durch physikalische Wäsche herausgelöst werden, so ist hierzu eine Mindestmenge $W_{min}$ der als Waschmittel eingesetzten Flüssigkeit notwendig, die sich sehr gut mit der folgenden Formel berechnen lässt:

$$W_{min} = V/(p \cdot \lambda_i)$$

In der Formel bedeuten V die Gesamtmenge des Gasgemisches, p den im Gasgemisch herrschenden Druck und $\lambda_i$ den Löslichkeitskoeffizienten der herauszuwaschenden Gaskomponente bezüglich des eingesetzten Waschmittels. Unter der Voraussetzung, dass sich die Löslichkeitskoeffizienten der Komponenten eines Gasgemisches hinreichend stark unterscheiden, ist es durch eine entsprechende Anpassung der Waschmittelmenge möglich, in einem Waschschritt diejenige Gaskomponente mit dem größten Löslichkeitskoeffizienten weitgehend unabhängig von den übrigen Gaskomponenten abzutrennen, d. h. selektiv zu entfernen. Mit größeren Waschmittelmengen können nach dem gleichen Prinzip in folgenden Waschschritten weitere Gaskomponenten oder Gruppen von Gaskomponenten mit ähnlichen Löslichkeitskoeffizienten selektiv ausgewaschen werden.

Die ausgewaschenen Gaskomponenten werden im Anschluss an die Gaswäsche aus dem beladenen Waschmittel entfernt, wodurch das Waschmittel regeneriert wird. Das regenerierte Waschmittel wird normalerweise wieder in der Gaswäsche eingesetzt, während die ausgewaschenen Gaskomponenten entweder entsorgt oder einer wirtschaftlichen Verwertung zugeführt werden.

Für die Reinigung von Syntheserohgasen, die in großtechnischem Maßstab in Vergasungsanlagen aus Kohle oder/und Kohlenwasserstoffeinsätzen beispielsweise durch Reformieren mit Wasserdampf oder durch partielle Oxidation erzeugt werden, und die in der Regel einige unerwünschte Bestandteile wie Wasser Kohlendioxid ($CO_2$), Schwefelwasserstoff ($H_2S$) und Kohlenoxidsulfid (COS) enthalten, werden bevorzugt physikalische Wäschen eingesetzt. Diese Verfahren bieten sich an, da die Syntheserohgase heute meist unter hohem Druck erzeugt werden, und die Wirksamkeit von physikalischen Wäschen in erster Näherung linear mit dem Betriebsdruck zunimmt. Von besonderer Bedeutung für die Reinigung von Syntheserohgasen ist die Methanolwäsche. Sie nützt die Tatsache aus, dass sich die Löslichkeitskoeffizienten von $H_2S$, COS und $CO_2$ in flüssigem, tiefkaltem Methanol um mehrere Größenordnungen von denen von Wasserstoff ($H_2$) und Kohlenmonoxid (CO) unterscheiden. Das Methanol wird nach dem Waschvorgang regeneriert und wieder in den Prozess zurückgeführt. Durch Substanzen, wie beispielsweise Zyanwasserstoff (Blausäure, HCN), das ebenfalls in Syntheserohgasen anzutreffen ist, wird die Regenerierung des Methanolwaschmittels erheblich erschwert, da sie aufgrund ihres hohen Löslichkeitskoeffizienten sehr stark an das Methanol gebunden sind. Ein Verbleiben und damit eine Anreicherung von Zyanwasserstoff im Methanol ist jedoch zu vermeiden, da dieses giftige Gas korrosiv wirkt und schon allein deswegen in den aus dem Synthesegas erzeugten Produkten (CO, $H_2$, Oxogas) nicht toleriert werden kann.

Nach dem Stand der Technik wird HCN beispielsweise in einer separaten Waschkolonne, die der Methanolwäsche vorgeschaltet ist, mit Wasser ausgewaschen. Das beladene Waschwasser, in dem die Blausäure in starker Verdünnung vorliegt, muss anschließend aufwendig entsorgt oder-z. B. durch Strippung mit Luftregeneriert werden.

Ein anders Verfahren nutzt die Tatsache aus, dass HCN im Vergleich zu $CO_2$, $H_2S$ und COS eine deutlich höhere Löslichkeit in flüssigem Methanol besitzt. Dadurch ist es möglich, HCN in einer Vorwäsche mit einer vergleichsweise kleinen Methanolmenge aus dem Syntheserohgas auszuwaschen (Lurgi-Druckschrift "The Rectisol Process for Gas Purification"). Die HCN-Vorwäsche wird hier in einem ersten Waschschritt in einer Methanolwaschkolonne, in welcher in einem zweiten Waschschritt Sauergase ausgewaschen werden, mit einer der HCN-Löslichkeit angepassten Methanolmenge durchgeführt. Zur Regenerierung wird das mit HCN beladene Methanolwaschmittel einer Strippkolonne in deren oberem Bereich zugeführt, während im unteren Bereich der Strippkolonne lediglich mit Sauergasen beladenes Methanolwaschmittel aufgegeben wird. Die abgestrippten Sauergase und das HCN gelangen anschließend gemeinsam in eine Claus-Anlage, wo aus den Sauergasen Schwefel gewonnen wird, und in der das HCN nicht stört.

Um eine Anreicherung von HCN im Methanolwaschmittel weitgehend zu vermeiden, muss das gesamte, zur Abtrennung von Sauergasen und HCN aus dem Syntheserohgas verwendete Methanolwaschmittel unter Bedingungen gestrippt werden, welche durch den Löslichkeitskoeffizienten von HCN bestimmt werden, und daher einen hohen anlagentechnischen und betrieblichen Aufwand erfordern. Erfolgt die Strippung unter weniger anspruchsvollen Bedingungen, so muss eine Anreicherung von HCN im Methanolwaschmittel mit all ihren negativen Folgen in Kauf genommen werden.

Aufgabe der vorliegenden Erfindung ist es daher, ein Verfahren der gattungsgemäßen Art anzugeben, durch das die Probleme des Standes der Technik bei der Reinigung von Zyanwasserstoff enthaltendem Syntheserohgas umgangen werden können.

Diese Aufgabe wird verfahrensseitig erfindungsgemäß dadurch gelöst, dass das aus dem ersten Waschschritt abgezogene beladene Waschmittel unabhängig von der übrigen Menge des beladenen Waschmittels einem Regenerierschritt zur Abtrennung der im ersten Waschschritt selektiv aus dem Rohgas entfernten Gaskomponenten unterzogen wird.

Das erfindungsgemäße Verfahren ist insbesondere zur Regenerierung des beladenen Waschmittels aus einer Methanolwäsche geeignet, in welcher aus einem Syntheserohgas mittels flüssigem, tiefkalten Methanol in einem ersten Waschschritt Zyanwasserstoff (HCN) und in wenigstens einem nachfolgenden Waschschritt Sauergase ($H_2S$, COS) und/oder Kohlendioxid ($CO_2$) abgetrennt werden. Der Löslichkeitskoeffizient von Zyanwasserstoff in flüssigem, tiefkaltem Methanol ist um das ca. 100-fache größer als diejenige von Sauergasen oder von $CO_2$. Aus diesem Grund kann Zyanwasserstoff mit einer entsprechend geringeren Methanolmenge aus dem Syntheserohgas ausgewaschen werden. Der vergleichsweise kleine, mit HCN beladene Teile des Methanolwaschmittels wird einer eigenen Regeneriereinrichtung zugeführt und dort unter den für eine weitgehende HCN-Abtrennung notwendigen Betriebsbedingungen regeneriert, während der überwiegende Teil des Methanolwaschmittels, der nicht mit HCN, jedoch mit Sauergasen und/oder $CO_2$ beladenen ist und daher vergleichsweise einfach regeneriert werden kann, einem Verfahren unterzogen wird, bei dem es sich bevorzugt um ein Verfahren zur Regenerierung von mit Sauergasen und/oder $CO_2$ beladenem Methanolwaschmittel handelt, wie es aus dem Stand der Technik hinlänglich bekannt ist.

Nach einer Ausgestaltung des erfindungsgemäßen Verfahrens, wird das mit HCN beladene Methanolwaschmittel aus der Methanolwäsche abgezogen, vorzugsweise angewärmt und in eine Strippkolonne entspannt, in welcher durch Strippung ein HCNhaltiger Gasstrom erzeugt wird. Das für die Strippung benötigte Strippgas wird zweckmäßiger Weise durch das Aufkochen des Sumpfproduktes der Strippkolonne gewonnen, dem hierzu - beispielsweise über einen dampfbeheizten Aufkocher - Wärme zugeführt wird. Eine bevorzugte Ausgestaltung des erfindungsgemäßen Verfahrens sieht vor, dass der HCN-haltige Gastrom zur Aufkonzentrierung durch Wärmetausch abgekühlt und dabei teilweise kondensiert wird. Sinnvollerweise wird der HCN-haltige Gastrom nur soweit abgekühlt, dass bei der teilweisen Kondensation hauptsächlich Komponenten des Strippgases auskondensiert werden.

Für den Fall, dass das mit HCN beladene Methanolwaschmittel Wasser enthält, sieht eine Variante des erfindungsgemäßen Verfahrens vor, dass das mit HCN und Wasser beladene Methanolwaschmittel zur Abstrippung des HCN einer einfachen Strippkolonne aufgegeben wird aus deren Sumpf ein Methanol/Wasser-Gemisch abgezogen und einer Methanol/Wasser-Trennkolonne zugeführt wird. Eine andere Variante des erfindungsgemäßen Verfahrens sieht vor, dass das mit HCN und Wasser beladene Methanolwaschmittel zur Abstrippung des HCN einer Strippkolonne aufgegeben wird, die als Trennwandkolonne ausgeführt ist und so betrieben wird, dass abgestripptes HCN, Wasser und weitgehend regeneriertes Methanolwaschmittel getrennt abgezogen werden. Bei dieser Verfahrensvariante kann auf eine separate Methanol/Wasser-Trennkolonne verzichtet werden.

Das erfindungsgemäße Verfahren weiterbildend wird vorgeschlagen, dass der aus der Strippkolonne abgezogene, mit HCN angereicherte Gasstrom einer umweltgerechten Entsorgung zugeführt wird. Bevorzugt wird der aus der Strippkolonne abgezogene, mit HCN angereicherte Gasstrom zu diesem Zweck in eine Claus-Anlage eingeleitet und dort verbrannt.

Die Erfindung betrifft ferner eine Vorrichtung zur Regenerierung des beladenen Waschmittels aus einer physikalischen Gaswäsche, in welcher aus einem zu reinigenden Gasgemisch (Rohgas) wenigstens in einem ersten von zumindest zwei aufeinander folgenden Waschschritten eine oder mehrere Gaskomponenten weitgehend selektiv entfernt werden.

Vorrichtungsseitig wird die gestellte Aufgabe dadurch gelöst, dass die Vorrichtung eine Regeneriereinrichtung aufweist, in welcher die im ersten Waschschritt aus dem Rohgas selektiv entfernten Gaskomponenten von beladenem Waschmittel abtrennbar sind und welcher ausschließlich das aus dem ersten Waschschritt beladen abgezogene Waschmittel zuführbar ist.

In einer zweckmäßigen Ausgestaltung der erfindungsgemäßen Vorrichtung ist vorgesehen, dass in der Regeneriereinrichtung Zyanwasserstoff (HCN) aus mit HCN beladenem Methanolwaschmittel abtrennbar ist, wobei das beladene Methanolwaschmittel nach dem ersten Waschschritt einer Methanolwäsche abgezogen wird, in der ein Syntheserohgas in zumindest einem weiteren Waschschritt von Sauergasen ($H_2S$, COS) und/oder Kohlendioxid ($CO_2$) gereinigt wird.

Eine Variante der erfindungsgemäßen Vorrichtung sieht vor, dass die Regeneriereinrichtung eine einfache Strippkolonne mit Aufkocher und Kopfkondensator aufweist, in welche das mit HCN beladene Methanolwaschmittel einleitbar ist und aus welcher eine HCN-reiche Gasfraktion sowie ein weitgehend HCN-freies, überwiegend aus Methanol bestehendes Sumpfprodukt abziehbar sind. Enthält das mit Zyanwasserstoff (HCN) beladene Methanolwaschmittel Wasser, so besteht das Sumpfprodukt der Strippkolonne aus einem Wasser/Methanol-Gemisch. In diesem Fall umfasst die erfindungsgemäße Vorrichtung zweckmäßigerweise eine Methanol/Wasser-Trennkolonne, welcher das Methanol/Wasser-Gemisch zur Auftrennung in eine Wasser- und eine Methanolfraktion zuführbar ist.

Eine andere Variante der erfindungsgemäßen Vorrichtung sieht vor, dass die Regeneriereinrichtung eine als Strippkolonne ausgeführte Trennwandkolonne mit Aufkocher und Kopfkondensator aufweist, in welche mit HCN und Wasser beladenes Methanolwaschmittel einleitbar ist und aus welcher eine HCN-reiche Gasfraktion, eine weitgehend HCN-freie Methanolfraktion sowie Wasser getrennt abziehbar sind.

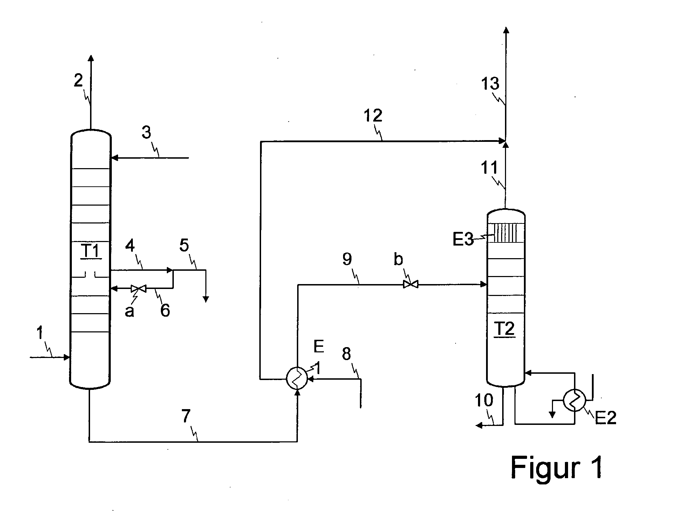

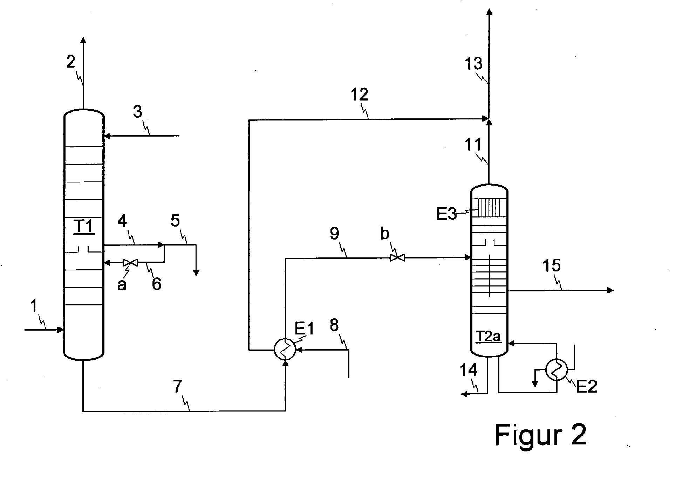

Im Folgenden soll die Erfindung anhand zweier in den Figuren 1 und 2 schematisch dargestellter Ausführungsbeispiele näher erläutert werden. In jedem Ausführungsbeispiel handelt es sich um eine Methanolwäsche, in der Reste von Wasser enthaltendes Syntheserohgas in einem ersten Waschschritt von Wasser und Zyanwasserstoff (HCN) und in einem zweiten Waschschritt von Kohlendioxid ($CO_2$) und Sauergasen ($H_2S$, COS) gereinigt wird. Als Waschmittel im ersten Waschschritt wird ein Teil des beladenen Methanolwaschmittels verwendet, das aus dem zweiten Waschschritt abgezogen wird. In den beiden Figuren werden gleiche Anlagenkomponenten mit gleichen Symbolen bezeichnet.

Der zu reinigende Gasstrom wird über Leitung 1 in den unteren Teil der Waschkolonne T1 eingeleitet, in der es weitgehend von Restwasser und HCN gereinigt wird. Über Leitung 2 wird der gereinigte Gasstrom, der jetzt überwiegend aus Wasserstoff und Kohlenmonoxid besteht, aus der Waschkolonne abgezogen und weitergeleitet. Am Kopf der Waschkolonne wird über Leitung 3 flüssiges Methanol als Waschmittel aufgegeben, das auf seinem Weg nach unten, begünstigt durch geeignete Einbauten, mit dem im Gegenstrom fließenden Gasstrom intensiv in Kontakt gebracht wird. Im oberen Teil der Waschkolonne werden die Sauergase COS und $H_2S$ sowie $CO_2$ aus dem Gasstrom absorptiv entfernt und reichern sich im Methanolwaschmittel an, das anschließend als beladenes Waschmittel über Leitung 4 aus der Waschkolonne abgezogen und zum größten Teil über Leitung 5 zur Regenerierung (nicht dargestellt) weitergeleitet wird.

Ein kleiner Teil des im oberen Teil der Waschkolonne beladenen Methanolwaschmittels wird über Leitung 6 und das Regelorgan a dem ersten Waschschritt zugeführt, der im unteren Bereich der Waschkolonne durchgeführt wird, und dient dort als Waschmittel zur weitgehend selektiven Entfernung von HCN und Restwasser aus dem Syntheserohgas. Das mit Wasser, HCN, $CO_2$, $H_2S$ und COS beladene Methanolwaschmittel sammelt sich im unteren Bereich der Waschkolonne T1 und wird von dort über Leitung 7 abgezogen. Im Wärmetauscher E1 wird das beladene Methanolwaschmittel gegen einen $H_2S$-reichen Stoffstrom 8, der von der nicht dargestellten Methanol-Regeneriereinheit kommt, angewärmt und über Leitung 9 und das Drosselorgan b in eine Einrichtung zur HCN-Abtrennung (T2, T2a) eingeleitet.

In dem in Figur 1 schematisch dargestellten Ausführungsbeispiel ist die Einrichtung zur HCN-Abtrennung T2 als einfache Strippkolonne ausgeführt. Bei der Entspannung des angewärmten beladene Methanolwaschmittel über das Drosselorgan b wird der größte Teil des absorbierten $CO_2$, COS und $H_2S$ desorbiert. Das HCN, das wesentlich stärker an das Methanol gebunden ist als die Sauergase, wird in der HCN-Strippkolonne T2 vom beladenen Methanolwaschmittel abgestrippt. Das hierfür benötigte Strippgas wird durch Aufkochen des vorwiegend aus Wasser und Methanol bestehenden Sumpfproduktes der HCN-Strippkolonne T2 erzeugt. Die hierfür benötigte Energie wird dem Sumpfprodukt über den dampfbeheizten Aufkocher E2 zugeführt. Gemeinsam mit dem Dampfstrom steigt das HCN zum Kopf der HCN-Strippkolonne T2, wo Wasser und Methanol im Kopfkühler E3 kondensiert werden. Das Sumpfprodukt wird über Leitung 10 zu einer nicht dargestellten Wasser/Methanol-Trennkolonne abgezogen, während das HCN zusammen mit den Sauergasen die HCN-Strippkolonne T2 über Leitung 11 verlässt und gemeinsam mit der $H_2S$-Fraktion 12, die bei der Regenerierung des im zweiten Waschschritt der Methanolwäsche beladenen Waschmittels anfällt, über Leitung 13 einer Claus-Anlage (nicht dargestellt) zur Schwefelgewinnung zugeführt wird.

Das in der Figur 2 dargestellte Ausführungsbeispiel unterscheidet sich von dem in Figur 1 dargestellten dadurch, dass es sich bei der Einrichtung zur HCN-Abtrennung um eine als Trennwandkolonne ausgeführte Strippkolonne T2a handelt. Durch den Einsatz einer Trennwandkolonne ist es möglich, auf eine Wasser/Methanol-Trennkolonne zu verzichten, da als Sumpfprodukt in T2a lediglich Wasser anfällt, das über Leitung 14 abgezogen und entsorgt wird. Über Leitung 15 wird weitgehend HCN-freies Methanol abgeführt und der nicht dargestellten Methanol-Regeneriereinheit aufgegeben, in die auch das über Leitung 5 aus der Waschkolonne T1 abgeleitete, mit Sauergasen beladene Methanolwaschmittel zur Regenerierung geführt wird.

Die gesamte Menge des auf unterschiedlichen Wegen regenerierten Methanolwaschmittels wird in beiden Ausführungsbeispielen über Leitung 3 wieder zurückgeleitet und der Waschkolonne T1 aufgegeben.

**Patentansprüche**

1. Verfahren zur Regenerierung des beladenen Waschmittels aus einer physikalischen Gaswäsche, in welcher aus einem zu reinigenden Gasgemisch (Rohgas) wenigstens in einem ersten von zumindest zwei aufeinander folgenden Waschschritten eine oder mehrere Gaskomponenten weitgehend selektiv entfernt werden, **dadurch gekennzeichnet,**

**dass** das aus dem ersten Waschschritt abgezogene beladene Waschmittel unabhängig von der übrigen Menge des beladenen Waschmittels einem Regenerierschritt zur Abtrennung der im ersten Waschschritt selektiv aus dem Rohgas entfernten Gaskomponenten unterzogen wird.

2. Verfahren nach Anspruch 1, **dadurch gekennzeichnet, dass** es sich bei dem beladenen Waschmittel um flüssiges, tiefkaltes und mit Zyanwasserstoff (HCN) beladenes Methanolwaschmittel handelt, welches nach dem ersten Waschschritt einer Methanolwäsche abgezogen wird, in der ein Syntheserohgas in zumindest einem weiteren Waschschritt von Sauergasen ($H_2S$, COS) und/oder Kohlendioxid ($CO_2$) gereinigt wird.

3. Verfahren nach Anspruch 2, **dadurch gekennzeichnet, dass** das mit HCN beladene Waschmittel aus der Methanolwäsche abgezogen, einer Strippkolonne zugeführt und dort durch Strippung mit einem Strippgas regeneriert wird.

4. Verfahren nach Anspruch 3, **dadurch gekennzeichnet, dass** als Strippgas durch Aufkochen des Sumpfproduktes der Strippkolonne erzeugter Dampf verwendet wird.

5. Verfahren nach einem der Ansprüche 2 bis 4, **dadurch gekennzeichnet, dass** das bei der Regenerierung des HCN-beladenen Waschmittels anfallende HCN-haltige Stoffgemisch einer Claus-Anlage zugeführt und dort verbrannt wird.

6. Vorrichtung zur Regenerierung des beladenen Waschmittels aus einer physikalischen Gaswäsche, in welcher aus einem zu reinigenden Gasgemisch (Rohgas) wenigstens in einem ersten von zumindest zwei aufeinander folgenden Waschschritten eine oder mehrere Gaskomponenten weitgehend selektiv entfernt werden, **dadurch gekennzeichnet, dass** die Vorrichtung eine Regeneriereinrichtung aufweist, in welcher die im ersten Waschschritt aus dem Rohgas selektiv entfernten Gaskomponenten von beladenem Waschmittel abtrennbar sind und welcher ausschließlich das aus dem ersten Waschschritt abgezogene beladene Waschmittel zuführbar ist.

7. Vorrichtung nach Anspruch 6, **dadurch gekennzeichnet, dass** in der Regeneriereinrichtung Zyanwasserstoff (HCN) aus mit HCN beladenem Methanolwaschmittel abtrennbar ist, wobei das beladene Methanolwaschmittel nach dem ersten Waschschritt einer Methanolwäsche abgezogen wird, in der ein Syntheserohgas in zumindest einem weiteren Waschschritt von Sauergasen ($H_2S$, COS) und/oder Kohlendioxid ($CO_2$) gereinigt wird.

8. Vorrichtung nach Anspruch 7, **dadurch gekennzeichnet, dass** die Regeneriereinrichtung eine Strippkolonne mit Aufkocher und Kopfkondensator aufweist, in welche mit HCN und Wasser beladenes Methanolwaschmittel einleitbar ist und aus welcher eine HCN-reiche Gasfraktion sowie ein weitgehend HCN-freies Methanol/Wasser-Gemsich abziehbar sind.

9. Vorrichtung nach Anspruch 7, **dadurch gekennzeichnet, dass** die Regeneriereinrichtung eine als Strippkolonne ausgeführte Trennwandkolonne mit Aufkocher und Kopfkondensator aufweist, in welche mit HCN und Wasser beladenes Methanolwaschmittel einleitbar ist und aus welcher eine HCN-reiche Gasfraktion, eine weitgehend HCN-freie Methanolfraktion sowie Wasser getrennt abziehbar sind.

Figur 1

Figur 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 196 10 846 A1 (LINDE AG [DE]) 25. September 1997 (1997-09-25) * Zusammenfassung; Abbildung 1 * * Spalte 1, Zeilen 3-17 * * Spalte 2, Zeile 31 - Spalte 3, Zeile 59 * ----- | 1-4,6-8 | INV. B01D53/14 |
| X | DE 22 60 247 A1 (LINDE AG) 12. Juni 1974 (1974-06-12) * Seite 1, Absätze 1,2 * * Seite 3, Absatz 3 - Seite 4, Absatz 1 * * Seite 5, Absatz 3 - Seite 7, Absatz 1; Abbildung 1 * ----- | 1-3,6,7 | |
| X | US 6 183 540 B1 (THONSGAARD JONATHAN E [US]) 6. Februar 2001 (2001-02-06) * Zusammenfassung; Abbildungen 1a,1b * * Spalte 1, Zeilen 8-34 * * Spalte 3, Zeilen 28-65 * * Spalte 5, Zeile 59 - Spalte 7, Zeile 33 * ----- | 1,6-8 | RECHERCHIERTE SACHGEBIETE (IPC) |
| X | WO 98/32520 A (MPR SERVICES INC [US]; DINGMAN JOHN CHARLES JR [US]; CUMMINGS ARTHUR L) 30. Juli 1998 (1998-07-30) * Seite 1, Zeilen 3-6 * * Seite 10, Zeilen 3-14 * * Seite 11, Zeilen 10-14 * * Seite 12, Zeilen 22-28 * * Seite 15, Zeilen 4-28; Abbildung 5 * ----- | 1,6,7 | B01D |

Der vorliegende Recherchenbericht wurde für alle Patentansprüche erstellt

| Recherchenort | Abschlußdatum der Recherche | Prüfer |
|---|---|---|
| Den Haag | 4. Juli 2007 | Howe, Patrick |

**ANHANG ZUM EUROPÄISCHEN RECHERCHENBERICHT
ÜBER DIE EUROPÄISCHE PATENTANMELDUNG NR.**

EP 07 00 4613

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2007

| Im Recherchenbericht angeführtes Patentdokument | Datum der Veröffentlichung | Mitglied(er) der Patentfamilie | Datum der Veröffentlichung |
|---|---|---|---|
| DE 19610846 A1 | 25-09-1997 | KEINE | |
| DE 2260247 A1 | 12-06-1974 | KEINE | |
| US 6183540 B1 | 06-02-2001 | CA 2316577 A1 | 13-11-2000 |
| WO 9832520 A | 30-07-1998 | AT 253398 T | 15-11-2003 |
| | | DE 69726012 D1 | 11-12-2003 |
| | | DE 69726012 T2 | 08-07-2004 |
| | | EP 0954369 A1 | 10-11-1999 |
| | | NO 993599 A | 24-09-1999 |
| | | US 6071484 A | 06-06-2000 |

EPO FORM P0461

Für nähere Einzelheiten zu diesem Anhang : siehe Amtsblatt des Europäischen Patentamts, Nr.12/82